# EUROPEAN PATENT SPECIFICATION

(11) **EP 4 017 402 B1**
(45) Date of publication and mention of the grant of the patent: **02.07.2025**
(21) Application number: 20761985.9
(22) Date of filing: 14.08.2020
(51) Int. Cl.: A61C 8/00, A61C 1/00, A61C 1/18

(54) **DENTAL DEVICE FOR REMOVING A PARTIALLY OR FULLY OSSEOINTEGRATED DENTAL IMPLANT**
ZAHNÄRZTLICHE VORRICHTUNG ZUM ENTFERNEN EINES TEILWEISE ODER VOLLSTÄNDIG OSSEOINTEGRIERTEN ZAHNIMPLANTATS
DISPOSITIF DENTAIRE POUR L'ENLÈVEMENT D'UN IMPLANT DENTAIRE PARTIELLEMENT OU TOTALEMENT OSTÉO-INTÉGRÉ

(30) Priority: 19.08.2019 US 201916543767
(43) Date of publication of application: 29.06.2022
(73) Proprietor: DENTSPLY SIRONA Inc., York, PA 17401 (US)
(72) Inventor: ELGH, Björn, 443-34 Lerum (SE); MAGNUSSON, Daniel, 475-41 Hönö (SE); JO, Jeremy, Somerville, MA 02144 (US)
(74) Representative: Venner Shipley LLP
(86) International application number: PCT/US2020/046291
(87) International publication number: WO 2021/034633

(56) References cited:
- EP-A1- 2 578 183
- EP-A1- 2 578 183
- EP-A2- 2 283 792
- EP-A2- 2 283 792
- WO-A2-2006/020803
- WO-A2-2006/020803
- US-A1- 2013 071 813
- US-A1- 2013 071 813

## Description

### TECHNICAL FIELD OF THE INVENTION

The present invention relates to a dental device for removing a dental implant. The present invention more particularly relates to a dental device for removing a dental implant which is at least partially or fully osseointegrated with a patient's jaw.

### BACKGROUND ART OF THE INVENTION

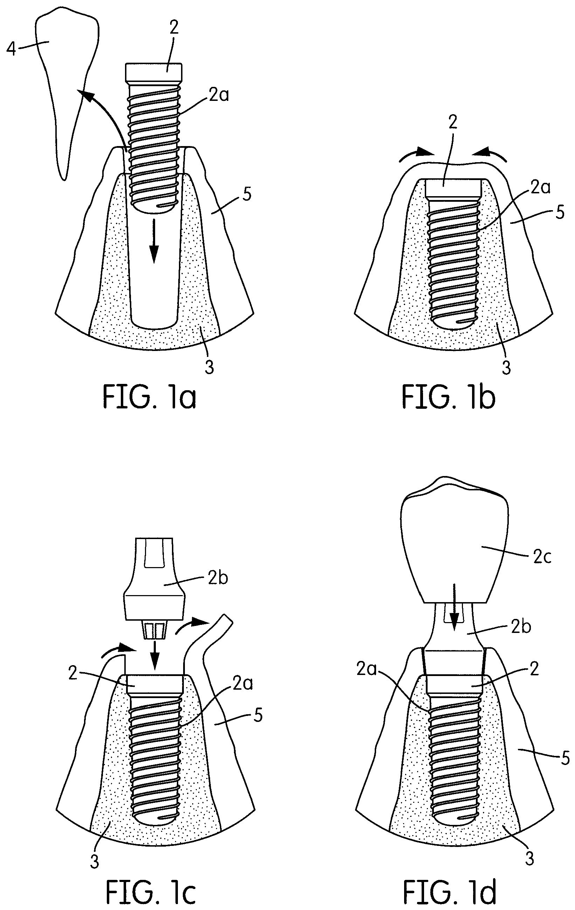

Dental implants are currently used as a solution to treat edentulous patients. Fig. 1a to 1d show the installation procedure of a dental implant (2) into a patient's jaw (3) according to the prior art. As shown in Fig. 1a, the dental implant (2) is designed to replace a missing or an extracted tooth (4). The dental implant (2) has a screw (2a). The dental implant (2) is screwed into the void or the extraction site in the patient's jaw (3). The screw (2a) is typically manufactured from titanium. The surface of the screw (2) is generally treated to promote osseointegration with the patient's jaw (3). Fig. 1b shows the healing process in which the surrounding gingiva (5) heals and the patient's jaw (3) grows and integrates with the dental implant (2). The dental implant (2) becomes a base for the final cosmetic restoration for the patient. As shown in Fig. 1c, the gingiva (5) is opened and a dental abutment (2b) is attached onto the dental implant (2). As shown in Fig.1c, a ceramic crown (2c) is attached to the dental abutment (2c).

Dental implants have a high success rate for osseointegration. Many reports indicate that 95-98% of all dental implants installed become osseointegrated. However, there are instances were a dental implant will need to be removed after the installation. The dental implant may experience a lack of success because of material failure, damage, rejection by the body caused through peri-implantitis, lack of osseointegration, or pronounced bone resorption around the dental implant site.

The prior art technologies which are available to assist a clinician in dental implant removal are primitive. The simplest known method is to fit an implant removal driver such as a lever arm into the internal feature of the dental implant and to manually apply a reverse torque for unscrewing the dental implant out of the patient's jaw. However, the dental anatomy is generally quite crowded and the amount of space in the patient's jaw near the dental implant usually limits the available rotation. In addition, the patient generally experiences an excessive static torque upon the jaw which can be quite unpleasant and damaging to the bone in the implant site. Furthermore, even if a dental implant is only partially osseointegrated, the implant removal driver and/or the dental implant may not always withstand the torque required to break the strong bonding between the dental implant and the bone. This method is also not effective when the internal features of the dental implant are damaged. However, there are removal drills which have reverse threads to help engaging the interior of the dental implant for additional grip during the removal.

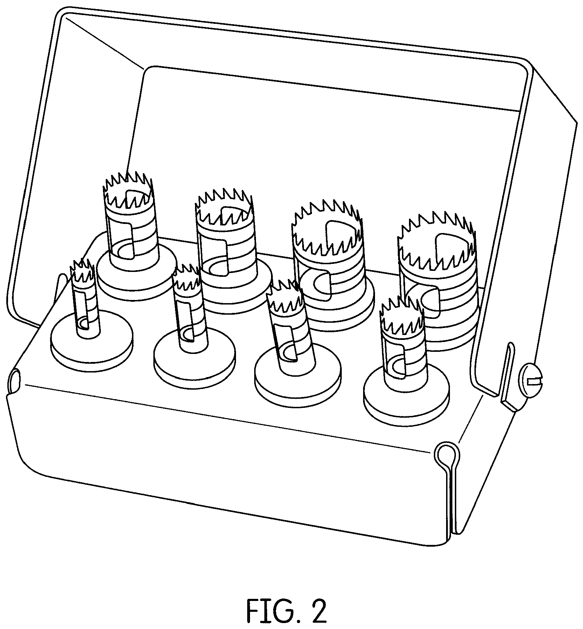

Another known method is to use a trephine as shown in Fig. 2. This trephine is a hollow circular saw that is designed to cut around the dental implant and remove the dental implant together with the surrounding bone. This method is effective; however, it can be very damaging to the extraction site and traumatic for the patient. Therefore, the extraction site will generally require a bone graft to fill the void left by the removal of the dental implant. The bone graft can take between 6 - 12 months to heal before the extraction site has enough bone material for the installation of a new dental implant.

EP2578183A1 discloses a device for loosening, insertion and removal of dental implants. The device comprises piezoelectric transducers as an ultrasound vibration actuator.

EP2283792A2 discloses an implant extraction tool.

### DISCLOSURE OF THE INVENTION

An objective of the present invention is to overcome the disadvantages of the prior art in an effective way and to provide a dental device for removing a dental implant which is at least partially or fully osseointegrated with a patient's jaw.

This objective is achieved by the dental device as defined in claim 1. The dependent claims define further developments.

The present invention provides a dental device for removing a dental implant which is at least partially or fully osseointegrated with a patient's jaw. The dental device comprises: a head portion for rotatingly holding a dental tool for unscrewing the dental implant; and a driving means for applying a torque to the dental tool for unscrewing the dental implant.

The driving means is specifically adapted to apply pulsed torques to the dental tool to unscrew the dental implant.

The present intention makes use of the well-known viscoelastic property of the human bone by applying pulsed torques for the removal of the fully or partially osseointegrated dental implant. Due to the viscoelastic property, the human bone becomes stiffer and more brittle at a high strain rate. A major advantageous effect of the present invention is that the use of the pulsed torques cause the bond between the bone and the dental implant to become more brittle and facilitate breakage thereof while causing less destructive stress on the surrounding bone and less pain for the patient. Thanks to the present invention, the sensation of the torque on the patient's jaw can be reduced and the dental implant site can be protected against excessive damages. Another major advantageous effect of the present invention is that the use of the pulsed torques is less invasive compared to the trephine dental implant removal kit. Thereby, traumatic incidents for the patient can be avoided or reduced as much as possible. Moreover, a new dental implant can be installed into the extraction site shortly after removal of the defect dental implant.

According to an embodiment of the present invention, the frequency and the magnitude of the pulsed torques may be separately or in combination varied by the driving means. The variation may be performed automatically or manually through the user. The dental device optionally has a user control for allowing the user to continuously or discretely vary the frequency and/or the magnitude of the pulsed torques at least within a predetermined range. Thereby, the pulsed torque can be adjusted to the size of the dental implant to be removed and the level of the osseointegration. Thereby, the removal of the dental implant can be better customized to the individual patient.

According the present invention, the variation of the frequency and/or magnitude of the pulsed torques is not limited to a specific form. According to an embodiment of the present invention, the frequency and/or magnitude of the pulsed torques preferably has a non-linear form, thus not static. For instance, a stepped form, a bell-shaped form or a sinusoidal form may be used. One or more pulse forms may be preset in the driving means. Alternatively, the pulse forms to be used may be set and/or selected by the user through the user control.

According to an embodiment of the present invention, the sequence of applying the pulsed torques may be varied through the driving means based on different conditions such as the moment of breakage of the bond between the dental implant and the bone, or preset time intervals, or user-set time intervals. For instance, the breakage of the bond may be determined through a gauge that senses the change in the load on the dental tool. In a version of this embodiment, the driving means applies one or more pulsed torques having a relatively high magnitude within an initial time interval and one or more pulsed torques having a relatively low magnitude within a subsequent time interval following the initial time interval. These time intervals are preferably preset. Alternatively, the time intervals may be set by the user through the user control. Alternatively, the initial time interval is preferably terminated when the bond is broken. In an alternative version of this embodiment, the driving means applies a constant torque having a relatively low magnitude within the subsequent time interval following the initial time interval. Thereby, the dental implant can be more steadily unscrewed for instance after it is estimated or sensed that the bond is completely broken. The subsequent time interval is preferably longer than the initial time interval to allow careful removal of the dental implant.

According to an embodiment of the present invention, the dental tool of the dental device has reversed threads for engaging the interior of the dental implant during the removal of the dental implant. Thereby the dental implant can be easily removed even when the internal features of the dental implant have been previously damaged for one reason or another.

According to an embodiment of the present invention, for facilitating breakage of the bond between the dental implant and the bone, the driving means is further adapted to apply pulsed forces to the dental tool along the axis thereof. The axial pulsed forces are preferably applied immediately at the beginning of the removal during the initial time interval. However, the axial pulsed forces may be applied at any stage during the removal interchangeably or in combination with the pulse torques. In alternative versions of this embodiment, the frequency and/or the magnitude of the said axial pulsed forces, as well as the pulse form and the sequence of applying the axial pulsed forces may be varied through the driving means similarly as described for the pulsed torques.

According to an embodiment of the present invention, the dental device is a handheld device. The driving means of the dental device is preferably pneumatic. Alternatively, the driving means may be electromechanical or hydraulic.

### BRIEF DESCRIPTION OF THE DRAWINGS

In the subsequent description, the present invention will be described in more detail by using exemplary embodiments and by referring to the drawings, wherein
Fig. 1a to Fig. 1d - are schematic cutaway views of a dental implant installation procedure according to the prior art;
Fig. 2 - is a schematic view of a trephine dental implant removal kit according to the prior art;
Fig. 3 - is a schematic partial view of a dental device according to an embodiment of the present invention;
Fig.4 - is a diagram including various sequences of pulsed torques applied by the dental device in Fig. 3 when removing a dental implant.

The reference numbers shown in the drawings denote the elements as listed below and will be referred to in the subsequent description of the exemplary embodiments.
- 1.: Dental device
- 2.: Dental implant
2a. Screw
2b. Dental Abutment
2c. Ceramic crown
- 3.: Patient's jaw
- 4.: Extracted tooth
- 5.: Gingiva
- 6.: Head portion
- 7.: Dental tool

- τ; *τ*₁*, τ*₂*, τ*₃ :: Pulsed torques
- *T*₁ :: Initial time Interval
- *T*₂ :: Subsequent time Interval
- a:: Stepped form
- b:: Sinusoidal form

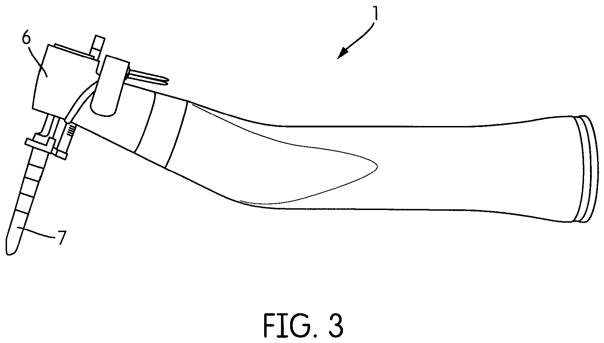

Fig. 3 shows a schematic partial view of a handheld dental device according to an embodiment. The dental device (1) is suitable for removing a dental implant (2) which is at least partially or fully osseointegrated with a patient's jaw (3) as shown in Fig. 1b. The dental device (1) comprises a head portion (6) which rotatingly holds a dental tool (7) for unscrewing the dental implant (2); and a driving means for applying a torque to the dental tool (7) for unscrewing the dental implant (2). The dental tool (7) has a shape that fits into the internal feature of the dental implant (2). The dental tool (7) is preferably exchangeable. Thereby, different dental tools (7) may be selectively used in accordance with the type of the dental implant (2) to be removed. The dental tool (7) may additionally have reversed threads for engaging the interior of the dental implant (2) during the removal of the dental implant (2).

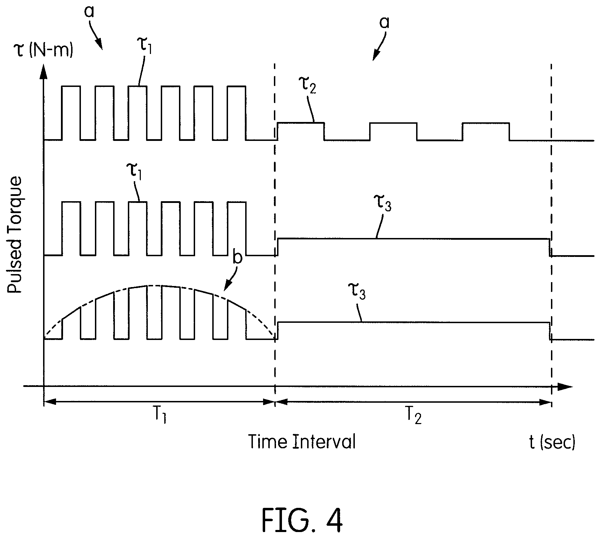

As shown in Fig. 4, the driving means is further adapted to apply pulsed torques (*τ; τ*₁*, τ*₂*, τ*₃) to the dental tool (7) to unscrew the dental implant (2). Fig.4 shows a diagram with various exemplary sequences of pulsed torques (*τ*; *τ*₁*, τ*₂*, τ*₃) that can be applied by the dental device (1) in Fig. 3 when removing the dental implant (2). As shown in Fig. 4, the driving means is further adapted to vary the frequency and/or the magnitude of the pulsed torques (*τ; τ*₁*, τ*₂*, τ*₃). In these exemplary sequences the frequency and the magnitude of the pulsed torques are varied in various ways. The driving means is also further adapted to vary the frequency and/or the magnitude of the pulsed torques (*τ; τ*₁*, τ*₂*, τ*₃) according to a non-linear form. As shown in the upper part and the middle part of Fig. 4, the frequency and the magnitude of the pulsed torques (*τ; τ*₁, *τ*₂, *τ*₃) are varied according to stepped form (a) . As shown in the lower part of Fig. 4, the frequency and the magnitude of the pulsed torque (*τ; τ*₁*, τ*₂, *τ*₃) is varied according to a sinusoidal form (b). Different non-linear forms may be used to reduce the sensation of the pulsed torque (*τ; τ*₁*, τ*₂*, τ*₃) for the patient. The sequence of pulsed torques (*τ; τ*₁*, τ*₂*, τ*₃) may be altered after elapse of a predetermined time interval or after breakage of the bond between the dental implant (2) and the bone. The moment of breakage of the bond can be estimated or detected through a gauge or a sensor. As shown in the upper part of Fig. 4, the driving means applies pulsed torques (*τ*₁) having a relatively high magnitude within an initial time interval (*T*₁) and pulsed torques (*τ*₂) having a relatively low magnitude within a subsequent time interval (*T*₂) following the initial time interval (*T*₁). As shown in the middle part of Fig. 4, the driving means alternatively applies a constant torque (*τ*₃) having a relatively low magnitude within a subsequent time interval (*T*₂) following the initial time interval (*T*₁).

The dental device (1) preferably has a user control for controlling the driving means. The user can set the number and duration of the time intervals (*T*₁*, T*₂) to be applied during the removal. The user can also set the frequency, magnitude and form of the pulsed torques (*τ; τ*₁*, τ*₂, *τ*₃) in each of the time intervals (*T*₁*, T*₂).

## Claims

1. A dental device (1) for removing a dental implant (2) which is at least partially or fully osseointegrated with a patient's jaw (3), comprising:
a head portion (6) for rotatingly holding a dental tool (7) for unscrewing the dental implant (2); and
a driving means for applying a torque to the dental tool (7) for unscrewing the dental implant (2);
**characterized in that**
the driving means is specifically adapted to apply pulsed torques (*τ; τ*₁*, τ*₂*, τ*₃) to the dental tool (7) to unscrew the dental implant (2).

2. The dental device (1) according to claim 1, **characterized in that**
the driving means is further adapted to vary the frequency and/or the magnitude of the pulsed torques (*τ; τ*₁*, τ*₂*, τ*₃).

3. The dental device (1) according to claim 2, **characterized in that**
the driving means is further adapted to vary the frequency and/or the magnitude of the pulsed torques (*τ; τ*₁*, τ*₂, *τ*₃) according to a non-linear form.

4. The dental device (1) according to claim 3, **characterized in that**
the non-linear form comprises a stepped form (a) and/or a sinusoidal form (b).

5. The dental device (1) according to any one of claims 1 to 4, **characterized in that**
the driving means is further adapted to apply one or more pulsed torques (*τ*₁) having a relatively high magnitude within an initial time interval (T₁) and one or more pulsed torques (*T*₂) having a relatively low magnitude within a subsequent time interval (*T*₂) following the initial time interval (*T*₁).

6. The dental device (1) according to any one of claims 1 to 4, **characterized in that**
the driving means is further adapted to apply one or more pulsed torques (*τ*₁) having a relatively high magnitude within an initial time interval (*T*₁) and a constant torque (*τ*₃) having a relatively low magnitude within a subsequent time interval (*T*₂) following the initial time interval (*T*₁).

7. The dental device (1) according to claim 1, **characterized in that** the driving means is further adapted to apply pulsed forces to the dental tool (7) along the axis thereof.

8. The dental device (1) according to claim 7, **characterized in that** the driving means is further adapted to vary the frequency and/or the magnitude of the said pulsed forces.

9. The dental device (1) according to claim 1, further comprising the dental tool (7), **characterized in that** the dental tool (7) has reversed threads for engaging the interior of the dental implant (2) during the removal of the dental implant (2).

## Patentansprüche

1. Zahnärztliche Vorrichtung (1) zum Entfernen eines Zahnimplantats (2), das mindestens teilweise oder vollständig in den Kiefer (3) eines Patienten osseointegriert ist, umfassend:
einen Kopfabschnitt (6) zum drehbaren Halten eines zahnärztlichen Werkzeugs (7) zum Lösen des Zahnimplantats (2); und
eine Antriebseinrichtung zum Anlegen eines Drehmoments an das zahnärztliche Werkzeug (7) zum Lösen des Zahnimplantats (2);
**dadurch gekennzeichnet, dass**
die Antriebseinrichtung speziell angepasst ist, um gepulste Drehmomente (*τ*; *τ*₁, *τ*₂, *τ*₃) an das zahnärztliche Werkzeug (7) anzulegen, um das Zahnimplantat (2) zu lösen.

2. Zahnärztliche Vorrichtung (1) nach Anspruch 1, **dadurch gekennzeichnet, dass** die Antriebseinrichtung ferner angepasst ist, um die Frequenz und/oder die Größe der gepulsten Drehmomente (*τ;* τ₁, *τ*₂, *τ*₃) zu variieren.

3. Zahnärztliche Vorrichtung (1) nach Anspruch 2, **dadurch gekennzeichnet, dass** die Antriebseinrichtung ferner angepasst ist, um die Frequenz und/oder die Größe der gepulsten Drehmomente (*τ;* τ₁, *τ*₂, *τ*₃) gemäß einer nichtlinearen Form zu variieren.

4. Zahnärztliche Vorrichtung (1) nach Anspruch 3, **dadurch gekennzeichnet, dass** die nichtlineare Form eine Stufenform (a) und/oder eine Sinusform (b) umfasst.

5. Zahnärztliche Vorrichtung (1) nach einem der Ansprüche 1 bis 4, **dadurch gekennzeichnet, dass**
die Antriebseinrichtung ferner angepasst ist, um ein oder mehrere gepulste Drehmomente (*τ*₁) mit einer relativ hohen Größe innerhalb eines Anfangszeitintervalls (*T*₁) und ein oder mehrere gepulste Drehmomente (*τ*₂) mit einer relativ niedrigen Größe innerhalb eines nachfolgenden Zeitintervalls (*T*₂) nach dem Anfangszeitintervall (*T*₁) anzulegen.

6. Zahnärztliche Vorrichtung (1) nach einem der Ansprüche 1 bis 4, **dadurch gekennzeichnet, dass**
die Antriebseinrichtung ferner angepasst ist, um ein oder mehrere gepulste Drehmomente (*T*₁) mit einer relativ hohen Größe innerhalb eines Anfangszeitintervalls (*T*₁) und ein konstantes Drehmoment (τ₃) mit einer relativ niedrigen Größe innerhalb eines nachfolgenden Zeitintervalls (*T*₂) nach dem Anfangszeitintervall (*T*₁) anzulegen.

7. Zahnärztliche Vorrichtung (1) nach Anspruch 1, **dadurch gekennzeichnet, dass** die Antriebseinrichtung ferner angepasst ist, um gepulste Kräfte auf das zahnärztliche Werkzeug (7) entlang seiner Achse auszuüben.

8. Zahnärztliche Vorrichtung (1) nach Anspruch 7, **dadurch gekennzeichnet, dass** die Antriebseinrichtung ferner angepasst ist, um die Frequenz und/oder die Größe der gepulsten Kräfte zu variieren.

9. Zahnärztliche Vorrichtung (1) nach Anspruch 1, ferner umfassend das zahnärztliche Werkzeug (7), **dadurch gekennzeichnet, dass** das zahnärztliche Werkzeug (7) gegenläufige Gewinde zum Eingreifen in das Innere des Zahnimplantats (2) während der Entfernung des Zahnimplantats (2) aufweist.

## Revendications

1. Dispositif dentaire (1) destiné à enlever un implant dentaire (2) qui est au moins partiellement ou totalement ostéo-intégré à la mâchoire (3) d'un patient, comprenant :
une partie tête (6) destinée à maintenir en rotation un outil dentaire (7) de manière à dévisser l'implant dentaire (2) ; et
un moyen d'entraînement destiné à appliquer un couple sur l'outil dentaire (7) de manière à dévisser l'implant dentaire (2) ;
**caractérisé en ce que**
le moyen d'entraînement est spécifiquement adapté pour appliquer des couples pulsés (*τ*; *τ*₁*, τ*₂*, τ*₃) sur l'outil dentaire (7) de manière à dévisser l'implant dentaire (2).

2. Dispositif dentaire (1) selon la revendication 1, **caractérisé en ce que** le moyen d'entraînement est en outre adapté pour faire varier la fréquence et/ou l'amplitude des couples pulsés (*τ; τ*₁, *τ*₂*, τ*₃)*.*

3. Dispositif dentaire (1) selon la revendication 2, **caractérisé en ce que**
le moyen d'entraînement est en outre adapté pour faire varier la fréquence et/ou l'amplitude des couples pulsés (*τ; τ*₁*, τ*₂*, τ*₃) selon une forme non linéaire.

4. Dispositif dentaire (1) selon la revendication 3, **caractérisé en ce que**
la forme non linéaire comprend une forme étagée (a) et/ou une forme sinusoïdale (b).

5. Dispositif dentaire (1) selon l'une quelconque des revendications 1 à 4, **caractérisé en ce que**
le moyen d'entraînement est en outre adapté pour appliquer un ou plusieurs couples pulsés (*τ*₁) présentant une amplitude relativement élevée dans un intervalle de temps initial (*T*₁) et un ou plusieurs couples pulsés (*τ*₂) présentant une amplitude relativement faible dans un intervalle de temps ultérieur (*T*₂) suivant l'intervalle de temps initial (*T*₁).

6. Dispositif dentaire (1) selon l'une quelconque des revendications 1 à 4, **caractérisé en ce que**
le moyen d'entraînement est en outre adapté pour appliquer un ou plusieurs couples pulsés (*τ*₁) présentant une amplitude relativement élevée dans un intervalle de temps initial (*T*₁) et un couple constant (τ₃) présentant une amplitude relativement faible dans un intervalle de temps ultérieur (*T*₂) suivant l'intervalle de temps initial (*T*₁).

7. Dispositif dentaire (1) selon la revendication 1, **caractérisé en ce que** le moyen d'entraînement est en outre adapté pour appliquer des forces pulsées sur l'outil dentaire (7) le long de son axe.

8. Dispositif dentaire (1) selon la revendication 7, **caractérisé en ce que** le moyen d'entraînement est en outre adapté pour faire varier la fréquence et/ou l'amplitude desdites forces pulsées.

9. Dispositif dentaire (1) selon la revendication 1, comprenant en outre l'outil dentaire (7), **caractérisé en ce que** l'outil dentaire (7) comporte des filets inversés pour se mettre en prise à l'intérieur de l'implant dentaire (2) pendant le retrait de l'implant dentaire (2).
